# EUROPÄISCHE PATENTANMELDUNG

(11) **EP 1 515 157 A1**
(43) Veröffentlichungstag der Anmeldung: **16.03.2005**
(21) Anmeldenummer: 04020795.3
(22) Anmeldetag: 01.09.2004
(51) Int. Cl.: G01S 7/481, G01S 7/484

(54) **Optoelektronische Erfassungseinrichtung**

(30) Priorität: 09.09.2003 DE 10341548
(71) Anmelder: IBEO Automobile Sensor GmbH, 22179 Hamburg (DE)
(72) Erfinder: Hipp, Johann, 22391 Hamburg (DE)
(74) Vertreter: Manitz, Finsterwald & Partner GbR

(57) **Zusammenfassung**

Eine optoelektronische Erfassungsvorrichtung, insbesondere ein Laserscanner, umfasst eine Sendeeinrichtung zur Aussendung von wenigstens einem Sendestrahlungsbündel mit elektromagnetischer Strahlung in einen Erfassungsbereich der Erfassungsvorrichtung, eine Empfangseinrichtung zum Empfang von aus dem Erfassungsbereich zurückgeworfener Strahlung des Sendestrahlungsbündels, und eine Ablenkeinrichtung, mit der das Sendestrahlungsbündel von der Sendeeinrichtung in den Erfassungsbereich und aus dem Erfassungsbereich zurückgeworfene Strahlung des Sendestrahlungsbündels auf die Empfangseinrichtung lenkbar ist, wobei die Sendeeinrichtung so ausgebildet ist, dass der Querschnitt des Sendestrahlungsbündels im Fernfeld vor der Erfassungseinrichtung länglich in Richtung einer Längsachse des Querschnitts geformt ist, wobei die Empfangseinrichtung ein Empfangsfeld aufweist, aus dem Strahlung empfangbar ist und dessen Querschnitt im Fernfeld entlang einer Längsachse des Querschnitts länglich geformt ist, und wobei die Sende- und die Empfangseinrichtung so ausgebildet und relativ zueinander angeordnet sind, dass im Fernfeld die Längsachsen der Querschnitte des Sendestrahlungsbündels und des Empfangsfeldes im Wesentlichen parallel zueinander ausgerichtet sind und dass in einer durch einen in Empfangsrichtung unmittelbar vor der Ablenkeinrichtung liegenden Eingangsquerschnitt definierten Eingangsebene das Sendestrahlungsbündel von dem Empfangsfeld in einer Richtung quer zur Längsachse des Empfangsfeldquerschnitts im Fernfeld beabstandet ist.

## Beschreibung

Die vorliegende Erfindung betrifft eine optoelektronische Erfassungsvorrichtung, insbesondere einen Laserscanner, mit einer Sendeeinrichtung zur Aussendung von wenigstens einem Sendestrahlungsbündel mit elektromagnetischer Strahlung in einen Erfassungsbereich der Erfassungsvorrichtung, einer Empfangseinrichtung zum Empfang von aus dem Erfassungsbereich zurückgeworfener Strahlung des Sendestrahlungsbündels, und einer Ablenkeinrichtung, mit der das Sendestrahlungsbündel von der Sendeeinrichtung in den Erfassungsbereich und aus dem Erfassungsbereich zurückgeworfene Strahlung des Sendestrahlungsbündels auf die Empfangseinrichtung lenkbar ist, wobei die Sendeeinrichtung so ausgebildet ist, dass der Querschnitt des Sendestrahlungsbündels im Fernfeld vor der Erfassungseinrichtung länglich in Richtung einer Längsachse des Querschnitts geformt ist, wobei die Empfangseinrichtung ein Empfangsfeld aufweist, aus dem Strahlung empfangbar ist und dessen Querschnitt im Fernfeld entlang einer Längsachse des Querschnitts länglich geformt ist, und wobei die Sende- und die Empfangseinrichtung so ausgebildet und relativ zueinander angeordnet sind, dass im Fernfeld die Längsachsen der Querschnitte des Sendestrahlungsbündels und des Empfangsfeldes im Wesentlichen parallel zueinander ausgerichtet sind.

Derartige optoelektronische Erfassungsvorrichtungen sind grundsätzlich bekannt und beispielsweise in der deutschen Patentanmeldung DE 101 43 060 A1 beschrieben.

Solche optoelektronischen Erfassungsvorrichtungen können insbesondere an Fahrzeugen zur Überwachung eines Bereichs vor und/oder neben dem Fahrzeug eingesetzt werden. In diesem Fall können jedoch bei kollinearer Anordnung der Längsachsen Störungen auftreten, wenn beispielsweise ein Fenster in der Erfassungsvorrichtung, durch das das Sendestrahlungsbündel abgegeben und zurückgeworfene Strahlung empfangen wird, verschmutzt, da ein Teil der abgegebenen Strahlung von verschmutzten Bereichen des Fensters zurückgeworfen wird. Ähnliche Störungen können beispielsweise durch Regen hervorgerufen werden, der nahe dem Fenster fällt.

Insbesondere im Hinblick auf den Einsatz in Fahrzeugen ist es dabei wünschenswert, dass die optoelektronische Erfassungsvorrichtung einen kompakten, raumsparenden Aufbau aufweist.

Der vorliegenden Erfindung liegt daher die Aufgabe zugrunde, eine optoelektronische Erfassungsvorrichtung der oben genannten Art bereitzustellen, die einen störungsarmen Betrieb erlaubt.

Die Aufgabe wird gelöst durch eine optoelektronische Erfassungsvorrichtung mit den Merkmalen des Anspruchs 1.

Die erfindungsgemäße optoelektronische Erfassungsvorrichtung, insbesondere ein Laserscanner, umfasst eine Sendeeinrichtung zur Aussendung von wenigstens einem Sendestrahlungsbündel mit elektromagnetischer Strahlung in einen Erfassungsbereich der Erfassungsvorrichtung, eine Empfangseinrichtung zum Empfang von aus dem Erfassungsbereich zurückgeworfener Strahlung des Sendestrahlungsbündels, und eine Ablenkeinrichtung, mit der das Sendestrahlungsbündel von der Sendeeinrichtung in den Erfassungsbereich und aus dem Erfassungsbereich zurückgeworfene Strahlung des Sendestrahlungsbündels auf die Empfangseinrichtung lenkbar ist, wobei die Sendeeinrichtung so ausgebildet ist, dass der Querschnitt des Sendestrahlungsbündels im Fernfeld vor der Erfassungseinrichtung länglich in Richtung einer Längsachse des Querschnitts geformt ist, wobei die Empfangseinrichtung ein Empfangsfeld aufweist, aus dem Strahlung empfangbar ist und dessen Querschnitt im Fernfeld entlang einer Längsachse des Querschnitts länglich geformt ist, und wobei die Sende- und die Empfangseinrichtung so ausgebildet und relativ zueinander angeordnet sind, dass im Fernfeld die Längsachsen der Querschnitte des Sendestrahlungsbündels und des Empfangsfeldes im Wesentlichen parallel zueinander ausgerichtet sind und dass in einer durch einen in Empfangsrichtung unmittelbar vor der Ablenkeinrichtung liegenden Eingangsquerschnitt definierten Eingangsebene das Sendestrahlungsbündel von dem Empfangsfeld in einer Richtung quer zur Längsachse des Empfangsfeldquerschnitts im Fernfeld beabstandet ist.

Die Sendeeinrichtung der erfindungsgemäßen optoelektronischen Erfassungsvorrichtung dient zur Aussendung eines Sendestrahlungsbündels mit elektromagnetischer Strahlung in einen Erfassungsbereich der Erfassungsvorrichtung, das zur Beleuchtung dort vorhandener Gegenstände dienen kann. Obwohl grundsätzlich beliebige elektromagnetische Strahlung verwendet werden kann, wird vorzugsweise optische Strahlung, d.h. elektromagnetische Strahlung im infraroten, sichtbaren oder ultravioletten Wellenlängenbereich, verwendet. Die Sendeeinrichtung kann zur Abgabe der elektromagnetischen Strahlung grundsätzlich eine beliebige Strahlungsquelle aufweisen, doch umfasst sie, zumindest bei Verwendung von optischer Strahlung, vorzugsweise wenigstens einen Laser oder wenigstens eine Laserdiode, vorzugsweise zur Abgabe von Strahlung im infraroten Bereich.

Die elektromagnetische Strahlung wird in Form eines Sendestrahlungsbündels von der optoelektronischen Erfassungsvorrichtung abgegeben, wozu im Strahlengang der abgegebenen elektromagnetischen Strahlung eine entsprechende strahlbildende oder strahlformende Einrichtung vorgesehen sein kann.

Unter einem Strahlungsbündel wird im Rahmen der Erfindung insbesondere auch ein von einem Laser abgegebener Laserstrahl, beispielsweise ein Gaußscher Strahl, oder eine von einer Laserdiode abgegebene Strahlung verstanden. Weiterhin kann das Strahlungsbündel durch mehrere Teilbündel gebildet sein, wenn die Strahlungsquelle in der Sendeeinrichtung zur Abgabe eines jeweiligen Sendestrahlungsbündels mehrere Strahlung abgebende Elemente aufweist.

Die Sendeeinrichtung ist so ausgebildet, dass wenigstens in einem Fernfeld, das sich bis zur Grenze der Reichweite der Erfassungsvorrichtung erstreckt, der Querschnitt des Sendestrahlungsbündels länglich in Richtungen der Längsachse des Abgabequerschnitts, insbesondere linien- oder strichförmig, geformt ist, so dass von der erfindungsgemäßen Erfassungsvorrichtung jeweils entsprechende, langgestreckte Strahlungsfronten abgegeben werden. Hierzu können beispielsweise eine entsprechende Strahlungsquelle und strahlformende Einrichtungen, beispielsweise Linsen oder Linsensysteme, verwendet werden. Bei der Verwendung von Linsen wird unter Fernfeld das Feld verstanden, in dem ein im Wesentlichen scharfes Bild der Strahlungsquelle erzeugt werden kann.

Unter einer länglichen Form des Querschnitts wird verstanden, dass das kleinste Rechteck, welches den Querschnitt des Sendestrahlungsbündels im Fernfeld umschließt, eine die Längsachse definierende längere Seite aufweist. Das Sendestrahlungsbündel kann im Fernfeld insbesondere diskrete, entlang der Längsachse angeordnete Strahlungsflecken oder einen zusammenhängenden, vorzugsweise strichförmigen Strahlungsfleck aufweisen.

Die von der Sendeeinrichtung abgegebene elektromagnetische Strahlung wird durch die Ablenkeinrichtung in den Erfassungsbereich gelenkt. Insbesondere kann das Sendestrahlungsbündel mittels der Ablenkeinrichtung über bzw. durch den Erfassungsbereich bewegt, vorzugsweise geschwenkt werden.

Die Strahlung des Sendestrahlungsbündels wird wenigstens teilweise von Gegenständen in dem Erfassungsbereich zurückgeworfen, wobei dies vorwiegend in nicht spiegelnder Weise geschieht.

Die aus dem Erfassungsbereich zurückgeworfene Strahlung ist mittels der Ablenkeinrichtung auf die Empfangseinrichtung lenkbar, die zur Detektion der zurückgeworfenen Strahlung ausgebildet ist. Insbesondere kann sie hierzu wenigstens ein entsprechend ausgebildetes Sensorelement aufweisen.

Die Empfangseinrichtung weist ein Empfangsfeld auf, aus dem Strahlung empfangbar, d.h. dem für die Strahlung empfindlichen Sensorelement oder den für die Strahlung empfindlichen Sensorelementen der Empfangseinrichtung zuführbar ist, und das insofern auch als Sichtfeld der Empfangseinrichtung bezeichnet werden kann.

Dadurch, dass die Ablenkeinrichtung sowohl zur Ablenkung des Sendestrahlungsbündels als auch eines aus dem Erfassungsbereich zurückgeworfenen Anteils des Sendestrahlungsbündels dient, werden von dieser das Sendestrahlungsbündel und das Empfangsfeld synchron und aufeinander abgestimmt bewegt.

Der Eingangsquerschnitt ist ein Querschnitt des Empfangsfeldes, der analog zu einem Querschnitt des Sendestrahlungsbündels definiert und insbesondere im Wesentlich orthogonal zu einer mittleren Einfallsrichtung der empfangbaren Strahlung orientiert sein kann. Er liegt in Einfallsrichtung der empfangbaren Strahlung unmittelbar vor der Ablenkeinrichtung. Darunter wird im Rahmen der Erfindung verstanden, dass der Eingangsquerschnitt in einem vorgegebenen Bereich nahe der Ablenkeinrichtung und insbesondere, in Einfallsrichtung der empfangbaren Strahlung gesehen, nach einer transparenten Abdeckung oder einem Fenster der erfindungsgemäßen Erfassungsvorrichtung liegt, durch die bzw. das die Strahlung empfangbar ist und die bzw. das eine in Bezug auf die Erfassungsvorrichtung äußere Oberfläche aufweist.

Der Querschnitt des Empfangsfeldes ist im Fernfeld wenigstens entlang einer Längsachse seines Querschnitts länglich geformt. Das Fernfeld ist dabei der Bereich, aus dem ein Gegenstand im Wesentlichen scharf auf ein Sensorelement oder Sensorelementfeld der Empfangseinrichtung abbildbar ist. Vorzugsweise wird als Fernfeld der Schnitt der Fernfelder der Sendeeinrichtung und der Empfangseinrichtung verstanden. Unter einer länglichen Form des Empfangsfeldquerschnitts wird dabei, wie bei dem Querschnitt des Sendestrahlungsbündels im Fernfeld, verstanden, dass das kleinste Rechteck, welches den Querschnitt des Empfangsfeldes im Fernfeld umschließt, eine längere Seite aufweist, die dann die Längsachse des Querschnitts definiert. Vorzugsweise sind im Fernfeld Form und Größe des Empfangsfeldquerschnitts der Form und Größe des Querschnitts des Sendestrahlungsbündels angepasst.

Weiterhin kann eine Auswerteschaltung vorgesehen sein, die bei Verwendung eines gepulsten Sendestrahlungsbündels in Abhängigkeit von dem Zeitabstand zwischen Abgabe eines Pulses und Empfang des von einem Gegenstand zurückgeworfenen Pulses, d.h. der Laufzeit des Pulses, einen Abstand des Gegenstands von der optoelektronischen Erfassungsvorrichtung ermittelt.

Erfindungsgemäß sind die Sende- und die Empfangseinrichtung zum einen so ausgebildet und relativ zueinander angeordnet, dass im Fernfeld die Längsachsen der Querschnitte des Sendestrahlungsbündels und des Empfangsfeldes im Wesentlichen parallel zueinander ausgerichtet sind. Dies ermöglicht es, Gegenstände nicht nur in einer Ebene, sondern wenigstens in einer Scheibe, deren Dicke durch die Ausdehnung des Sendestrahlungsbündels in Längsrichtung des Querschnitts bestimmt ist, zu erfassen. Insbesondere wenn die Empfangseinrichtung eine entlang der Längsachse des Empfangsfeldes ortsaufgelöste Detektion der Strahlung erlaubt, kann so eine Abtastung in Richtung der Längsachse des Sendestrahlungsbündelquerschnitts bzw. des Empfangsfeldes erfolgen. Wird das Sendestrahlungsbündel parallel zu einer Ebene bewegt, ergibt sich so ein quasi-dreidimensionaler Erfassungsbereich.

Zum anderen ist in einer durch einen in Empfangsrichtung unmittelbar vor der Ablenkeinrichtung liegenden Eingangsquerschnitt definierten Eingangsebene das Sendestrahlungsbündel von dem Empfangsfeld in einer Richtung quer zur Längsachse des Empfangsfeldquerschnitts im Fernfeld beabstandet. Stark vereinfacht formuliert kann im Bereich der Eingangsebene das Sendestrahlungsbündel seitlich des Eingangsquerschnitts bzw. des Empfangsbündels liegen.

Dadurch kann erreicht werden, dass ein Teil des Sendestrahlungsbündels, der durch eine Störung, beispielsweise von einer verschmutzten Abschirmung nahe der Ablenkeinrichtung oder Regen, teilweise zurückgeworfen wird, nicht in die Empfangseinrichtung bzw. ein Sensorelement in der Empfangseinrichtung gelangen kann. Es ergibt sich dadurch eine Ausblendung eines Nahbereichs des Empfangsfeldes nahe des Abgabeund Eingangsquerschnitts, in dem die erfindungsgemäße Erfassungsvorrichtung gewissermaßen blind ist. Die Größe des ausgeblendeten Nahbereichs wird durch den minimalen Abstand des Sendestrahlungsbündels von dem Eingangsquerschnitt bzw. dem Empfangsfeld in der Eingangsebene, einen Winkel zwischen durch geometrische Schwerpunkte der Querschnitte bestimmten Mittelstrahlen des Sendestrahlungsbündels und des Empfangsfeldes sowie Divergenz- bzw. Konvergenzwinkel des Sendestrahlungsbündels bzw. des Empfangsfeldes bestimmt. Dabei wird mit zunehmendem seitlichem Abstand des Sendestrahlungsbündels von dem Eingangsquerschnitt das ausgeblendete Nahfeld größer. Es wird also ein wesentlich störungsärmerer Empfang erreicht.

Gleichzeitig ergibt sich eine äußerst kompakte Bauform der erfindungsgemäßen Erfassungsvorrichtung, da bei Vorgabe des ausgeblendeten Nahbereichs ein nur geringer Abstand zwischen dem Sendestrahlungsbündel und dem Eingangsquerschnitt ausreicht.

Bevorzugte Weiterbildungen der Erfindung sind in den Unteransprüchen, der Beschreibung und der Zeichnung beschrieben.

Um auch den Empfang von Strahlung zu verhindern, die unmittelbar vor der erfindungsgemäßen Erfassungsvorrichtung, beispielsweise durch Regentropfen, wenigstens teilweise zurückgeworfen wird, ist es bevorzugt, dass das Sendestrahlungsbündel das Empfangsfeld in einem vorgegebenen Abstand von vorzugsweise weniger als 0,5 m von der Ablenkeinrichtung nicht überschneidet. Die Entfernung von der Ablenkeinrichtung wird dabei durch den Abstand von der Eingangsebene oder den Abstand von einer für das Sendestrahlungsbündel transparenten Abdeckung, durch die das Sendestrahlungsbündel aus der erfindungsgemäßen Vorrichtung abgestrahlt werden kann, definiert. Es ergibt sich so ein relativ großes ausgeblendetes Nahfeld der erfindungsgemäßen Erfassungsvorrichtung.

Um die Sende-, Empfangs- und Ablenkeinrichtung vor äußeren Einflüssen zu schützen, ist es bevorzugt, dass eine Abdeckung vorgesehen ist, durch die das von der Ablenkeinrichtung abgelenkte Sendestrahlungsbündel abgestrahlt wird und von der Empfangseinrichtung nach Ablenkung durch die Ablenkeinrichtung zu empfangende Strahlung hindurchtritt, und dass sich das Sendestrahlungsbündel und das Empfangsfeld innerhalb der Abdeckung nicht überschneiden. Die Abdeckung, die aus einem für die Strahlung des Sendestrahlungsbündels transparenten Material gefertigt ist, ist in Strahlungsrichtung des Sendestrahlungsbündels hinter dem Abgabequerschnitt angeordnet, so dass von der Abdeckung, beispielsweise aufgrund einer Verschmutzung, Teile des Sendestrahlungsbündels nicht in das Empfangsfeld zurückgeworfen werden können. Vorzugsweise umfasst die Abdeckung einen Abschnitt, der die Form eines Abschnitts einer Kugelschale aufweist. Dabei ist vorzugsweise der Abschnitt so angeordnet, dass eine möglichst geringe Ablenkung der ausgesendeten und der empfangenen Strahlung durch die Abdeckung auftritt. Besonders bevorzugt weist der Abschnitt einen ringförmigen Querschnitt auf, wobei die entsprechende Symmetrie- bzw. Drehachse im Wesentlichen orthogonal zu einer Ebene ist, parallel zu der das Sendestrahlungsbündel von der Ablenkeinrichtung bewegt wird. Der Abschnitt kann dabei einstückig oder vorzugsweise aus zwei Teilen, die entlang des Querschnitts mit größtem Durchmesser orthogonal zu der Drehachse miteinander verbunden sind, ausgebildet sein.

Um eine in einer Richtung parallel zu der Längsachse des Eingangsquerschnitts örtlich aufgelöste Erfassung von Gegenständen zu ermöglichen, ist es bevorzugt, dass die Empfangseinrichtung mehrere entlang einer Längsachse angeordnete Sensorelemente aufweist. Vorzugsweise sind diese auf einem optoelektronischen Bauelement als Sensorelementfeld angeordnet. Die Sensorelemente sind dabei vorzugsweise für die Strahlung des Sendestrahlungsbündels empfindlich. Insbesondere bei Schwenkung des Sendestrahlungsbündels können so mehrere in einer Richtung parallel zu der Längsachse der Querschnitte des Sendestrahlungsbündels bzw. des Empfangsfeldes beabstandet angeordnete Ebenen mit einem beispielsweise strichförmigen Sendestrahlungsbündel abgetastet werden. Die Ebenen sind dabei vorzugsweise so gegeneinander geneigt, dass sie von der erfindungsgemäßen Erfassungsvorrichtung ausgehend in der Richtung parallel zu der Längsachse des Empfangsfeldes auseinanderlaufend aufgefächert sind.

Damit eine große Höhe des Erfassungsbereichs in Richtung der Längsachse des Querschnitts des Sendestrahlungsbündels erreicht werden kann, ist dessen Querschnitt im Fernfeld in Richtung der Längsachse vorzugsweise wenigstens doppelt so groß wie in der Richtung quer dazu. Auf diese Weise kann der Erfassungsbereich mit einem Sendestrahlungsbündel mit strichförmigem Querschnitt abgetastet werden.

Grundsätzlich kann die längliche Form des Abgabequerschnitts auf beliebige Art und Weise erzeugt werden. Beispielsweise kann ein im Wesentlichen rotationssymmetrisches Sendestrahlungsbündel durch eine entsprechende optische Einrichtung, die beispielsweise eine Zylinderlinse umfassen kann, in einer durch die Orientierung der Zylinderlinse bestimmten Richtung aufgeweitet werden. Es ist jedoch bevorzugt, dass die Sendeeinrichtung wenigstens eine Strahlungsquelle zur Abgabe eines Sendestrahlungsbündels mit einem länglichen Querschnitt umfasst. Bei der Strahlungsquelle kann es sich insbesondere um eine Laserdiode handeln, die ein längliches Emissionsfeld zur Abgabe der Strahlung aufweist. Solche Strahlungsquellen weisen eine besonders hohe abgestrahlte Leistung bei, verglichen mit konventionellen Laserdioden, gleicher Leuchtdichte auf, was deren Lebensdauer verlängern kann, da diese nicht so hoch belastet zu werden brauchen.

Vorzugsweise sind die Strahlungsquelle und eine diese steuernde Steuereinrichtung dazu ausgebildet, um mittels der Strahlungsquelle gepulste Sendestrahlungsbündel abzugeben.

Bei einer Ausführungsform der erfindungsgemäßen Erfassungsvorrichtung ist es bevorzugt, dass die Sendeeinrichtung zur Aussendung von wenigstens zwei Sendestrahlungsbündeln mit elektromagnetischer Strahlung in den Erfassungsbereich, und die Empfangseinrichtung zum Empfang von aus dem Erfassungsbereich zurückgeworfener Strahlung der Sendestrahlungsbündel ausgebildet sind, dass mittels der Ablenkeinrichtung die Sendestrahlungsbündel von der Sendeeinrichtung in den Erfassungsbereich und aus dem Erfassungsbereich zurückgeworfene Strahlung der Sendestrahlungsbündel auf die Empfangseinrichtung lenkbar sind, dass die Querschnitte der Sendestrahlungsbündel im Fernfeld vor der Erfassungsvorrichtung länglich in Richtungen jeweiliger Längsachsen der Querschnitte geformt sind, und dass die Sende- und die Empfangseinrichtung so ausgebildet und relativ zueinander angeordnet sind, dass im Fernfeld die Längsachsen der Querschnitte der Sendestrahlungsbündel zueinander und zu der Längsachse des Querschnitts des Empfangsfeldes im Wesentlichen parallel ausgerichtet sind, und dass in einer durch einen in Empfangsrichtung unmittelbar vor der Ablenkeinrichtung liegenden Eingangsquerschnitt definierten Ebene die Sendestrahlungsbündel von dem Empfangsfeld in einer Richtung quer zur Längsachse des Empfangsfeldquerschnitts im Fernfeld beabstandet sind. Die Sendestrahlungsbündel überlappen sich dabei wenigstens teilweise nicht.

Die zuvor geschilderten Ausbildungen und Ausführungsformen der erfindungsgemäßen Erfassungsvorrichtung gelten entsprechend auch für das zweite Sendestrahlungsbündel bzw. dieses erzeugende oder beeinflussende Komponenten der erfindungsgemäßen Erfassungsvorrichtung.

Ist die abgegebene elektromagnetische Strahlung gepulst, können die Pulse der beiden Sendestrahlungsbündel synchron oder vorzugsweise alternierend abgegeben werden.

Bei Ausfall eines der Sendestrahlungsbündel, beispielsweise durch Ausfall einer Strahlungsquelle oder Verschmutzung einer Abdeckung bzw. eines Fensters, durch die bzw. das das Sendestrahlungsbündel abgegeben wird, können so Gegenstände, wenn auch gegebenenfalls mit geringerer Frequenz oder Reichweite, mittels des anderen Sendestrahlungsbündels noch erfasst werden.

Durch synchrone Abstrahlung von gepulsten Sendestrahlungsbündeln können, wenn diese sich überlappen, besonders hohe Intensitäten im Überschneidungsbereich und damit eine große Reichweite erzielt werden. Weiterhin kann bei entsprechender Wahl der Intensitäten der Sendestrahlungsbündel in dem Bereich, in dem keine Überschneidung vorliegt, eine Augengefährdung bei gleichzeitig hoher Intensität im Überschneidungsbereich ausgeschlossen werden.

Die Querschnitte der Sendestrahlungsbündel in der Eingangsebene relativ zu dem Eingangsquerschnitt können dabei grundsätzlich bezogen auf die Längsachse des Querschnitts des Empfangsfeldes im Fernfeld, die parallel zu der des Eingangsquerschnitts ist, auf gleichen Seiten des Eingangsquerschnitts liegen. Es ist jedoch bevorzugt, dass die Querschnitte der Sendestrahlungsbündel in der Eingangsebene auf gegenüberliegenden Seiten des Eingangsquerschnitts des Empfangsfeldes und vorzugsweise symmetrisch zu dem Eingangsquerschnitt des Empfangsfeldes angeordnet sind. Dies kann durch entsprechende Ausbildung und Anordnung der Sende-, Ablenk- und/oder Empfangseinrichtung erreicht werden. Durch die Anordnung der Sendestrahlungsbündel auf verschiedenen Seiten des Eingangsquerschnitts kann eine besonders raumsparende Anordnung bei gleichzeitig geringer Strahlaufweitung erreicht werden. Insbesondere können bei symmetrischer Anordnung die Ausbreitungswege für die Strahlung beider Sendestrahlungsbündel symmetrisch zueinander ausgebildet werden, so dass sich eine ähnliche Abbildungsgeometrie ergibt, was die Auswertung der Signale wesentlich erleichtern kann. Weiterhin ist das durch die Anordnung und Ausrichtung der Sendestrahlungsbündel und des Eingangsquerschnitts ausgeblendete Nahfeld symmetrisch ausgebildet. Die Symmetrie zum Eingangsquerschnitt kann dabei beispielsweise durch eine Spiegelsymmetrie zu einer Mittelachse des Eingangsquerschnitts oder einem geometrischen Schwer- bzw. Mittelpunkt des Eingangsquerschnitts gegeben sein. Vorzugsweise sind auch die Formen und Größen der Querschnitte der Sendestrahlungsbündel entsprechend symmetrisch zueinander.

Dabei ist es besonders bevorzugt, dass die Sendeeinrichtung so eingerichtet ist, dass Mittelstrahlen der Sendestrahlungsbündel windschief zueinander sind. Unter den Mittelstrahlen werden solche Strahlen der Sendestrahlungsbündel verstanden, die sich durch Bildung geometrischer Schwerpunkte über die Querschnitte der Sendestrahlungsbündel entlang ihres Ausbreitungsweges ergeben. Durch die windschiefe Orientierung, bei der die Mittelstrahlen sich nicht schneiden und nicht parallel zueinander verlaufen sowie vorzugsweise nicht in einer Ebene liegen, kann erreicht werden, dass der von den Sendestrahlungsbündeln beleuchtete Bereich im Fernfeld in einer Richtung parallel zu den Längsachsen der Querschnitte der Sendestrahlungsbündel länger ist als die einzelnen Querschnitte in dieser Richtung, so dass beispielsweise eine strich- oder linienförmige Beleuchtung mit relativer großer Länge des Strichs erzielt werden kann.

Weiterhin ist es bevorzugt, dass im Abstand der Reichweite der Erfassungsvorrichtung die Sendestrahlungsbündel in einer Richtung quer zu den Längsachsen ihrer Querschnitte im Fernfeld punktjustiert sind und sich in einer Richtung parallel zu deren Längsachsen zu einer Linie ergänzen.

Um den Erfassungsbereich mit einer strichartigen Beleuchtung abtasten zu können und damit in einer Bewegungsebene der Sendestrahlungsbündel eine hohe Auflösung und in einer Richtung quer dazu eine große Erfassungshöhe erhalten zu können, ist es bevorzugt, dass die Sendeeinrichtung so eingerichtet ist, dass sich die Querschnitte der Sendestrahlungsbündel in einem vorgegebenen Entfernungsbereich von der Erfassungsvorrichtung zum einen in einer Richtung parallel zu den Längsachsen der Sendestrahlungsbündelquerschnitte nur teilweise oder nicht und zum anderen in einer Richtung quer zu den Längsachsen der Sendestrahlungsbündelquerschnitte teilweise oder vollständig überlappen. Besonders bevorzugt schließen die Querschnitte der Sendestrahlungsbündel ohne einen wesentlichen Zwischenraum zwischen diesen aneinander an oder berühren sich wenigstens. Der Entfernungsbereich kann insbesondere durch das Fernfeld gegeben sein. Die Längsachsen können jedoch gedreht werden, wie es in der deutschen Patentanmeldung DE 101 43 060 A1 beschrieben ist, deren Inhalt hiermit durch Bezugnahme in die Beschreibung aufgenommen wird.

Die beiden Sendestrahlungsbündel können grundsätzlich mittels einer einzelnen Strahlungsquelle und einem Strahlteiler oder eines beweglichen Spiegels erzeugt werden. Es ist jedoch bevorzugt, dass die Sendeeinrichtung wenigstens zwei getrennte Strahlungsquellen zur Abgabe der Sendestrahlungsbündel umfasst. Hierdurch wird zum einen eine größere Betriebssicherheit erreicht, da bei Ausfall einer Strahlungsquelle ein, wenn auch eingeschränkter, Betrieb mit der anderen Strahlungsquelle möglich ist. Weiterhin brauchen die Strahlungsquellen, wenn sich die Sendestrahlungsbündel im Fernbereich überlappen, bei entsprechender Auslegung nicht an der Leistungsgrenze betrieben zu werden, so dass zum einen eine längere Lebensdauer erreicht wird und zum anderen bei auftretenden Verschmutzungen noch eine Leistungsreserve besteht.

Weiterhin ist es bei Verwendung einer Sendeeinrichtung mit zwei Strahlungsquellen und einer Empfangseinrichtung mit entlang einer Längsachse angeordneten Sensorelementen bevorzugt, dass die entlang der Längsachse angeordneten Sensorelemente in einer Richtung quer zu der Längsachse zwischen zwei Strahlungsquellen der Sendeeinrichtung angeordnet sind. Insbesondere können mittels der Strahlungsquellen Sendestrahlungsbündel mit Querschnitten im Fernfeld abgebbar sein, die entlang zueinander im Wesentlichen parallel verlaufender Längsachsen der Querschnitte länglich geformt sind. Die Sensorelemente und die Strahlungsquellen brauchen dabei nicht in einer Ebene angeordnet zu sein. Vielmehr genügt es, dass die Relativanordnung in einer Projektion entlang wenigstens einer der Strahlrichtungen der Sendestrahlungsbündel besteht, so dass die Strahlungsquellen beispielsweise in Richtung der empfangenen Strahlung vor oder hinter den Sensorelementen angeordnet sein können.

Diese Ausführungsform zeichnet sich durch einen besonders geringen Platzbedarf bei gleichzeitig einfacher Strahlführung aus. Bei Verwendung einer Sendeeinrichtung zur Abgabe nur eines Sendestrahlungsbündels mit einer Strahlungsquelle und einer Empfangseinrichtung mit entlang einer Längsachse angeordneten Sensorelementen ist es bevorzugt, dass die entlang der Längsachse angeordneten Sensorelemente in einer Richtung quer zu der Längsachse neben der Strahlungsquelle der Sendeeinrichtung angeordnet ist. Insbesondere bei Verwendung von Strahlungsquellen mit länglichen Emissionsflächen können diese mit ihren Längsachsen zumindest in einer Projektion auf eine zu dem Sendestrahlungsbündel in diesem Abschnitt orthogonalen Ebene neben den Sensorelementen und parallel zu der Längsachse der Sensorelementanordnung angeordnet sein.

Um eine besonders einfache und langlebige Justierung des bzw. der Sendestrahlungsbündel relativ zu dem Empfangsfeld zu erzielen, ist es bevorzugt, dass die Sendeeinrichtung wenigstens eine Strahlungsquelle und für jede Strahlungsquelle eine strahlformende Einrichtung sowie die Empfangseinrichtung eine abbildende Einrichtung zur Fokussierung von empfangener Strahlung auf Sensorelemente der Empfangseinrichtung aufweisen, und dass die strahlformenden und die abbildenden Einrichtungen in einer Ebene angeordnet und vorzugsweise als einstückige Platte mit entsprechenden Linsen ausgebildet sind. Insbesondere kann die Platte als Spritzgussteil aus einem entsprechenden, hochtransparenten, vorzugsweise amorphen Kunststoff mit bevorzugt hohem Brechungsindex, beispielsweise einem Polymethylmethacrylat (PMMA) oder Polycarbonat, gefertigt sein.

Im Hinblick auf die Ablenkeinrichtung ist es bevorzugt, dass die Ablenkeinrichtung durch eine um eine vorgegebene Achse drehbare spiegelnde Fläche und einen Drehantrieb zum Drehen der spiegelnden Fläche aufweist. Die spiegelnde Fläche kann dabei beispielsweise durch ein Prisma oder vorzugsweise einen flachen Spiegel bereitgestellt sein. Auf diese Weise bleiben Längsachsen der Querschnitte der Sendestrahlungsbündel und des Empfangsfeldes während des gesamten Weges der Sendestrahlungsbündel einschließlich der zurückgeworfenen Anteile parallel. Die Drehachse ist dabei vorzugsweise orthogonal zu der Längsachse ausgerichtet, entlang derer Sensorelemente der Empfangseinrichtung angeordnet sind. Weiterhin ist die Drehachse vorzugsweise so ausgerichtet, dass die Längsachse des Eingangsfeldes im Fernfeld und in der Mitte des Erfassungsbereichs im Wesentlichen parallel zu der Drehachse orientiert ist, so dass sich dann die maximale Erfassungshöhe orthogonal zu der Erfassungsebene ergibt. Grundsätzlich kann die Ablenkeinrichtung noch weitere, gegebenenfalls auch relativ zur Erfassungsvorrichtung feststehende spiegelnde Elemente aufweisen.

Die erfindungsgemäße optoelektronische Erfassungsvorrichtung wird bevorzugt an Fahrzeugen verwendet, um einen Bereich vor, hinter und/oder neben dem Fahrzeug zu überwachen.

Insbesondere in diesem Fall ist es bevorzugt, dass die von der Erfassungsvorrichtung erfassten Daten für ein Verfahren zur Objekterkennung und - verfolgung von Gegenständen in dem Erfassungsbereich verwendet werden.

Die Erfindung wird im Folgenden beispielhaft an Hand der Zeichnungen weiter erläutert. Es zeigen:
- Fig. 1: eine schematische Schnittansicht einer optoelektronischen Erfassungsvorrichtung nach einer ersten bevorzugten Ausführungsform der Erfindung,
- Fig. 2: eine schematische, perspektivische Darstellung von Teilen einer Sende- und Empfangseinrichtung der Erfassungsvorrichtung in Fig. 1,
- Fig. 3: eine schematische, teilweise und nicht maßstabsgerechte Schnittansicht durch die Erfassungsvorrichtung in Fig. 1 in einer Ebene parallel zu einer Schwenkebene,
- Fig. 4: eine schematische, teilweise Darstellung des Verlaufs der Sendestrahlungsbündel und des Empfangsfeldes der Erfassungsvorrichtung in Fig. 1 parallel zu der Schwenkebene,
- Fig. 5: eine schematische Ansicht von Querschnitten von Sendestrahlungsbündeln und eines Eingangsquerschnitts der Erfassungsvorrichtung in Fig. 1 entlang einer Eingangsebene, wobei die Blickrichtung parallel zu der Schwenkebene der Sendestrahlungsbündel verläuft,
- Fig. 6: eine schematische Ansicht der Querschnitte der Sendestrahlungsbündel und des Empfangsfeldes der Erfassungsvorrichtung in Fig. 1 im Fernfeld, wobei die Blickrichtung parallel zu der Schwenkebene der Sendestrahlungsbündel verläuft und die Ansicht gegenüber Fig. 5 verkleinert ist,
- Fig. 7: eine Fig. 4 entsprechende, schematische Ansicht eines Teils einer Erfassungsvorrichtung nach einer zweiten bevorzugten Ausführungsform der Erfindung,
- Fig. 8: eine Fig. 5 entsprechende, schematische Ansicht von Querschnitten von Sendestrahlungsbündeln und eines Eingangsquerschnitts der Erfassungsvorrichtung in Fig. 7 entlang einer Eingangsebene, wobei die Blickrichtung parallel zu der Schwenkebene der Sendestrahlungsbündel verläuft, und
- Fig. 9: eine Fig. 6 entsprechende, schematische Ansicht der Querschnitte der Sendestrahlungsbündel und des Empfangsfeldes der Erfassungsvorrichtung in Fig. 7 im Fernfeld, wobei die Blickrichtung parallel zu der Schwenkebene der Sendestrahlungsbündel verläuft.

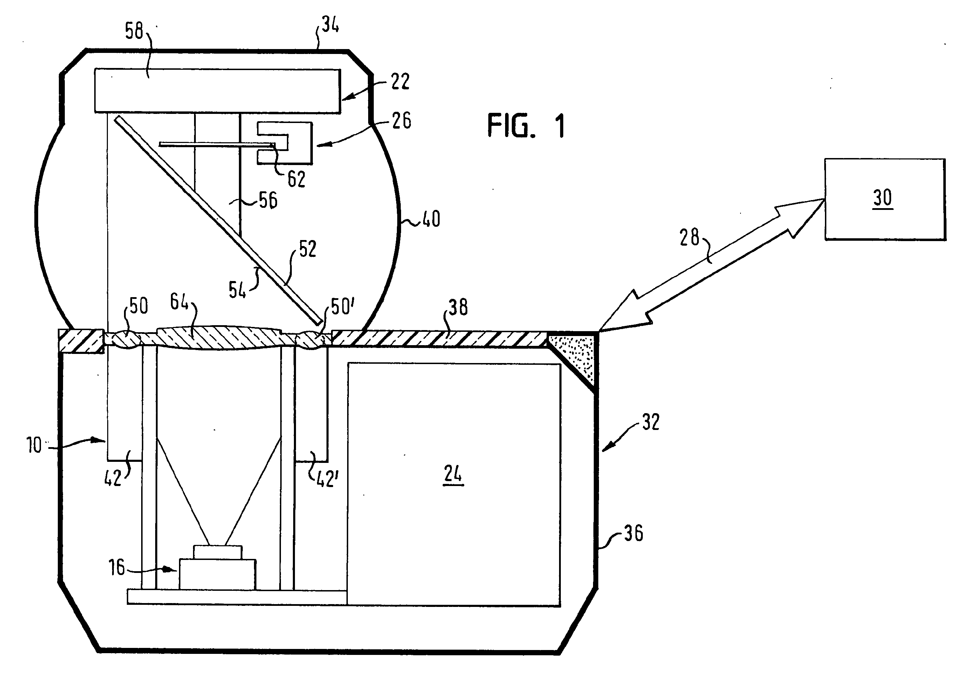

In den Fig. 1 bis 4 umfasst eine optoelektronische Erfassungsvorrichtung nach einer ersten bevorzugten Ausführungsform der Erfindung, die als Laserscanner ausgebildet ist, eine Sendeeinrichtung 10 zum Aussenden von zwei Sendestrahlungsbündeln 12, 12' in einen Erfassungsbereich 14, eine Empfangseinrichtung 16 zum Empfang von aus dem Erfassungsbereich von einem Gegenstand 18 zurückgeworfener Strahlung 20 wenigstens eines der Sendestrahlungsbündel 12, 12' und eine Ablenkeinrichtung 22 zur Ablenkung der Sendestrahlungsbündel 12, 12' in den Erfassungsbereich 14 und zur Ablenkung der aus dem Erfassungsbereich 14 zurückgeworfene Strahlung 20 wenigstens eines der Sendestrahlungsbündel 12, 12' auf die Empfangseinrichtung 16. Weiterhin ist eine Steuer- und Auswerteeinheit 24 vorgesehen, die mit der Sendeeinrichtung 10, der Empfangseinrichtung 16 und einer Winkelermittlungseinrichtung 26 verbunden ist.

Die Steuer- und Auswerteinrichtung ist, in Fig. 1 nur sehr schematisch dargestellt, über eine Datenverbindung 28 mit einer Datenverarbeitungsvorrichtung 30 verbunden, mittels derer von der optoelektronischen Erfassungsvorrichtung erfasste Daten beispielsweise zur Erkennung und Verfolgung von Gegenständen in dem Erfassungsbereich 14 entsprechenden Objekten durchgeführt werden kann.

Die Sendeeinrichtung 10, die Empfangseinrichtung 16, die Ablenkeinrichtung 22, die Steuer- und Auswerteeinrichtung 24 und die Winkelermittlungseinrichtung 26 sind in einem Gehäuse 32 angeordnet, das einen Deckelabschnitt 34, einen Basisabschnitt 36, eine Trägerplatte 38 und einen hochtransparenten Dom 40 in Form eines Abschnitts einer Kugelschale mit ringförmigem Querschnitt umfasst. Der Dom 40 ist dabei aus zwei gleichen Hälften zusammengesetzt, die entlang ihres größten Öffnungsquerschnitts miteinander verklebt oder verschweißt sind.

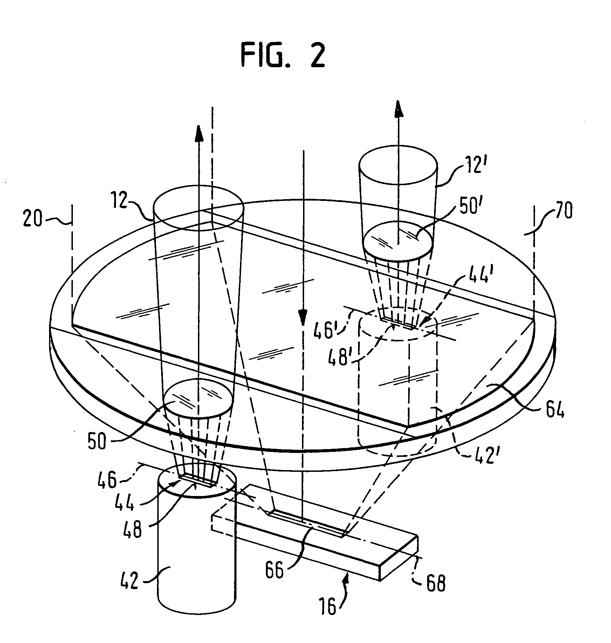

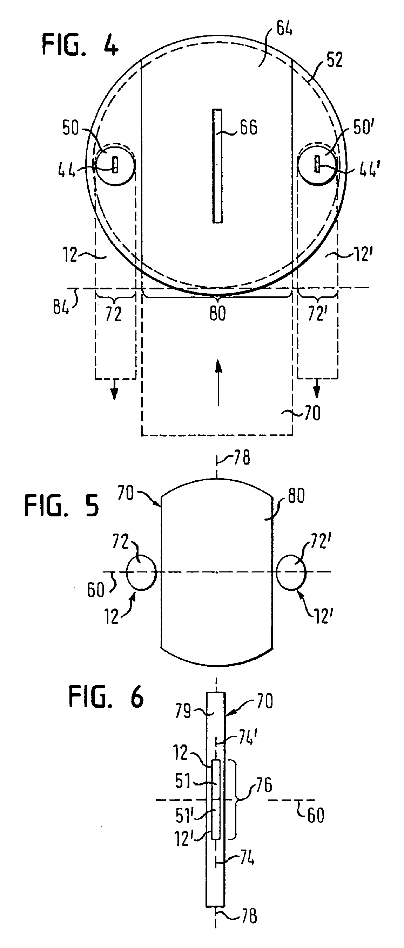

Die in dem Basisabschnitt 36 des Gehäuses angeordnete Sendeeinrichtung 10 umfasst zwei Strahlungsquellen 42 und 42', die jeweils Laserdioden 44, 44' zur Abgabe von infraroter Strahlung mit jeweils einer länglich entlang einer Längsachse 46, 46' geformten, linienförmigen Emissionsfläche 48 bzw. 48' aufweisen (vgl. Fig. 2). Die Längsachsen 46, 46', die Längsachsen der Strahlungsquellen 42, 42' bilden, bzw. die Emissionsflächen 48, 48' sind dabei parallel zueinander ausgerichtet (vgl. Fig. 2 und 4).

Die Strahlungsquellen 42 und 42' sind quer zu einer Hauptsichtrichtung der Erfassungseinrichtung angeordnet, die im Beispiel auch den mittleren Radius des kreissektorförmigen Erfassungsbereichs 14 bildet.

Die Strahlungsquellen 42 und 42' und insbesondere die Laserdioden 44 und 44' werden von der Steuer- und Auswerteeinrichtung 24 angesteuert.

Zwei als strahlformende Einrichtungen fungierende Linsen 50 und 50' der Sendeeinrichtung 10 bilden die Emissionsflächen 48, 48' in den Erfassungsbereich 14 ab und sind in der einstückigen, als Spritzgussteil aus einem hochtransparenten Kunststoff, im Beispiel Polycarbonat, gebildeten Trägerplatte 38 ausgebildet. Zur Abbildung bzw. Bündelung sind die Laserdioden 44 und 44' jeweils im Bereich der Brennebenen der Linsen 50 und 50' angeordnet, so dass sich im Fernfeld längliche und insbesondere linienförmige Querschnitte 51, 51' der durch die Linsen 50 und 50' fokussierten Sendestrahlungsbündel 12 und 12' ergeben (vgl. Fig. 6).

Die Sendestrahlungsbündel 12 und 12' werden von der teilweise in dem Deckelabschnitt 34 und dem Dom 40 des Gehäuses 32 angeordneten Ablenkeinrichtung 22 abgelenkt. Diese weist dazu einen gegenüber der Strahlrichtung der Sendestrahlungsbündel 12 und 12' in dem Dom 40 angeordneten, um 45° geneigten Spiegel 52 mit einer spiegelnden Fläche 54 auf, der an einer Welle 56 gehalten ist. Die Welle 56 und damit der Spiegel 52 und die spiegelnde Fläche 54 sind durch eine Antriebseinheit 58 der Ablenkeinrichtung 22 um eine Drehachse drehbar, die im Wesentlichen parallel zu der Richtung der Sendestrahlungsbündel 12 und 12' zwischen den Strahlungsquellen 42 und 42' und durch den Mittelpunkt der Verbindungsstrecke zwischen den Strahlungsquellen 42, 42' bzw. den geometrischen Schwerpunkten der Emissionsflächen 48 und 48' verläuft.

Weiterhin liegt der Mittelpunkt des Doms 40, der durch den Mittelpunkt der Kugel gegeben ist, die der Kugelschale des Doms 40 entspricht, auf dem Schnittpunkt der reflektierenden Fläche 54 des Spiegels 52 mit der Drehachse, um die die reflektierende Fläche 54 bzw. der Spiegel 52 drehbar ist. Auf diese Weise kann der Dom 40 höchstens geringfügige, unerwünschte Ablenkungen der Sendestrahlungsbündel 12, 12' hervorrufen.

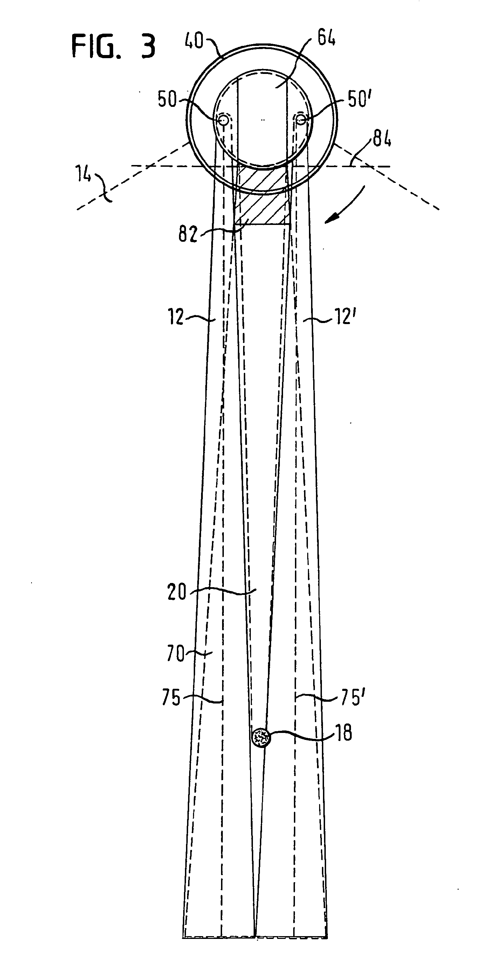

Durch gleichförmige Drehung des Spiegels 52 mit einer vorgegebenen Drehgeschwindigkeit werden die Sendestrahlungsbündel 12 und 12' in einer zu der Drehachse orthogonalen Richtung verlaufenden Schwenkebene 60 gleichförmig über den kreissektorförmigen Erfassungsbereich 14 geschwenkt, was in Fig. 3 durch einen gebogenen Pfeil angedeutet ist. Die optoelektronische Erfassungseinrichtung bildet daher einen Laserscanner.

Der jeweilige Winkel des Spiegels 52 und damit der Winkel von der Ablenkeinrichtung 22 abgelenkten Sendestrahlungsbündel 12 und 12' zu einer vordefinierten Referenzgeraden der Empfangseinrichtung 16 in der Schwenkebene 60 wird mit der teilweise in dem Deckelabschnitt 34 und teilweise in dem Dom 40 angeordneten Winkelermittlungseinrichtung 26 erfasst, die dazu über eine an der Welle 56 gehaltene Encoderscheibe 62 und in den Figuren nicht gezeigte optische Einrichtungen zur Erfassung von Marken auf der Encoderscheibe 62 verfügt. Entsprechende Signale werden an die Steuer- und Auswerteeinrichtung 24 abgegeben.

Die abgelenkten Sendestrahlungsbündel 12 und 12' werden dann durch den Dom 40 in den Erfassungsbereich 14 abgestrahlt.

Die abgelenkten Sendestrahlungsbündel 12 und 12' sind in einer Richtung parallel zu der Schwenkebene 60 im Abstand der Reichweite der Erfassungseinrichtung punktjustiert und dazu in der Projektion in einem sehr kleinen Winkel aufeinander zu geneigt. Weiterhin sind sie in einer Richtung orthogonal zu parallelen Längsachsen 74, 74' der Querschnitte 51, 51' im Fernfeld aneinander anschließend angeordnet, so dass sich ein linienförmiger beleuchteter Fleck 76 ergibt. Dies ist zum einen in der aus Gründen der Darstellbarkeit nicht maßstabsgerechten Fig. 3, in der insbesondere die Divergenzwinkel der Sendestrahlungsbündel 12, 12' und die Winkel zwischen Projektionen der Sendestrahlungsbündel 12, 12' auf die Schwenkebene 60 übertrieben groß gezeigt sind, und zum anderen in der stark und nicht maßstabsgetreue verkleinerten Fig. 6 gezeigt.

Aus dem Erfassungsbereich können die Sendestrahlungsbündel 12, 12' von einem Gegenstand wie dem Gegenstand 18 als zurückgeworfene Strahlung 20 zurückgeworfen werden.

Das Empfangsstrahlungsbündel 20 wird nach Durchtritt durch den Dom 40 von dem Spiegel 52 auf eine abbildende Einrichtung 64 in Form einer in der Trägerplatte 38 ausgebildeten Linse gelenkt und auf ein für die Strahlung der Strahlungsquellen 42 und 42' empfindliches Sensorelementfeld 66 der Empfangseinrichtung 16 abgebildet, das mehrere entlang einer Längsachse 68 angeordnete, in den Figuren nicht einzeln gezeigte Photodiodenelemente umfasst. Die Photodiodenelemente sind mit der Steuer- und Auswerteeinrichtung 24 zum Auslesen von erfassten Intensitäten entsprechenden Signalen ausgebildet.

Die Strahlungsquellen 42 und 42' bzw. Laserdioden 44 und 44' sind dabei symmetrisch zu der Längsachse 68 der Empfangseinrichtung 16 bzw. des Sensorelementfeldes 66 und von dieser in einer Richtung orthogonal zu der Längsachse 68 so beabstandet angeordnet, dass die Längsachsen 46, 46' der Laserdioden 44 und 44' parallel zueinander und parallel zu der Längsachse 68 des Sensorelementfeldes verlaufen, und dass sich die Laserdioden 44 und 44' in einer Richtung quer zur Längsachse 68 des Sensorelementfeldes 66 nicht mit dem Sensorelementfeld 66 überlappen.

Die Linsen 50 und 50' der Sendeeinrichtung 10 sind entsprechend symmetrisch zu der Linse 64 der Empfangseinrichtung 16 in der einstückigen Trägerplatte 38 angeordnet. Durch die Ausbildung der Linsen in der einstückigen Trägerplatte 38, die gleichzeitig einen Teil des Gehäuses 32 bildet und insbesondere auch den Dom 40 trägt, wird eine einfache und stabile Justierung der Sende- und Empfangsstrahlengänge erreicht.

Bei einer gegebenen Stellung des Spiegels 52 ergibt sich damit ein Empfangsfeld 70, aus dem aus dem Erfassungsbereich 14 zurückgeworfene Strahlung der Sendestrahlungsbündel 12, 12' auf das Sensorelementfeld 66 lenkbar bzw. fokussierbar ist. Ein Teilstrahl der von dem Gegenstand 18 zurückgeworfenen Strahlung, der in dem Empfangsfeld verläuft, ist in Fig. 3 als Empfangsstrahl 20 gezeigt.

Mit der Drehung des Spiegels 52 werden jeweils in Abstrahlrichtung der Sendestrahlungsbündel 12, 12' nach der Ablenkeinrichtung liegende Abschnitte der Sendestrahlungsbündel 12 und 12' und des Empfangsfeldes 70 über den Erfassungsbereich 14 geschwenkt, wobei die zwischen der Ablenkeinrichtung 22 und der Sendeeinrichtung 10 bzw. der Ablenkeinrichtung und der Empfangseinrichtung 16 liegenden Abschnitte unbewegt sind.

Die optischen Verhältnisse sind nochmals in den Fig. 3 bis 6 gezeigt, die zur besseren Darstellung jeweils nicht maßstabsgetreu sind, wobei insbesondere in Fig. 3, wie zuvor erwähnt, übertrieben große Winkel verwendet werden.

Die von den Emissionsflächen 48 und 48' abgegebenen Sendestrahlungsbündel 12, 12' werden durch die Linsen 50 und 50' so gebündelt, dass sie nach Reflexion an dem Spiegel 52 im Fernfeld entlang entsprechender Längsachsen 74, 74' längliche, linien- bzw. strichförmige Querschnitte 51, 51' erhalten, deren Form der der Emissionsfläche entspricht. Dabei können die Seiten der Querschnitte 51, 51' dort entsprechend den Seitenverhältnissen der Emissionsflächen 48, 48' beispielsweise ein Längenverhältnis von 1:10 aufweisen.

Die Sendestrahlungsbündel 12 und 12' weisen dabei einen sehr geringen Divergenzwinkel auf und verlaufen durch entsprechende Ausbildung und Anordnung der Strahlungsquellen 42 und 42' bzw. Linsen 50 und 50' mit ihren Mittelstrahlen 75, 75', die durch die geometrischen Schwerpunkte der Querschnitte der Sendestrahlungsbündel 12, 12' entlang ihres Ausbreitungsweges definiert sind, im Bereich nach der Ablenkeinrichtung 22 wie bereits ausgeführt windschief zueinander.

Im Fernfeld bilden die Sendestrahlungsbündel 12 und 12' mit ihren Querschnitten 51, 51' gemeinsam den beleuchteten strichförmigen Fleck 76, dessen Höhe in Richtung der Längsachsen 74 und 74' der Sendestrahlungsbündelquerschnitte 51, 51' größer ist als die der Sendestrahlungsquerschnitte 51, 51' einzeln (vgl. Fig. 5 und 6).

Das Empfangsfeld 70 weist im Fernfeld entsprechend der länglichen, strichartigen Form des Sensorelementfeldes 66 einen entlang einer Längsachse 78 länglichen, insbesondere linienförmigen Querschnitt 79 auf, der in Form und Größe dem des Flecks 76 entspricht.

Da die Ablenkeinrichtung 22 Sendestrahlungsbündel 12, 12' und Empfangsstrahlungsbündel 20 entsprechend ablenkt, sind im Fernfeld die Längsachsen 74 und 74' der Sendestrahlungsbündel 12 und 12' auch parallel zu der Längsachse 78 des Empfangsfeldquerschnitts 79 ausgerichtet. Das bedeutet, dass von den Sendestrahlungsbündeln erzeugte Beleuchtungslinien bzw. -striche dort parallel zu dem strichförmigen Empfangsfeldquerschnitt sind und in diesem angeordnet sind.

Wie in DE 101 43 060 A1 beschrieben, drehen sich die Querschnitte der Sendestrahlungsbündel 12 und 12' und des Empfangsfeldes 70 je nach Winkelstellung des Spiegels 52 relativ zu der Schwenkebene 60, wobei deren Relativorientierung jedoch gleich bleibt.

Ein Eingangsquerschnitt 80 des Empfangsfeldes 70 wird durch dessen Querschnitt unmittelbar hinter der Ablenkeinrichtung 22, im Beispiel zwischen dem Spiegel 52 und dem Dom 40 in Höhe der Schwenkebene 60, definiert. Bedingt durch die Abbildung durch die Linse 64 und des in Bezug auf den Lichtweg geringen Abstands von der Linse 64 ist der Eingangsquerschnitt nicht mehr linienförmig.

In einer durch den Eingangsquerschnitt 80 definierten Eingangsebene 84 sind die Sendestrahlungsbündel 12 und 12' bzw. deren Querschnitte 72, 72' entlang der Eingangsebene 84 von dem Eingangsquerschnitt in einer Richtung quer zu der Längsachse 78 des Empfangsfeldquerschnitts 79 bzw. des Flecks 76 beabstandet, so dass sich dort die Sendestrahlungsbündel 12, 12' nicht mit dem Empfangsfeld 70 überschneiden.

Wie in Fig. 3 und 4 zu sehen, überschneiden sich die Sendestrahlungsbündel 12, 12' und das Empfangsfeld 70 vielmehr erst in einem vorgegebenen Abstand von der Ablenkeinrichtung 22, der als der Abstand von einer Eingangsebene 84 definiert ist und im Beispiel 0,5 m beträgt, so dass ein Nahbereich 82 des Empfangsfeldes 70 ausgeblendet wird, da dort auf einen Gegenstand treffende Strahlung eines der Sendestrahlungsbündel 12, 12' nicht in das Empfangsfeld 70 zurückgeworfen wird (vgl. Fig. 3).

In diesem Bereich ist insbesondere der Dom 40 angeordnet, so dass eine Verschmutzung auf der Außenseite des Doms 40 nicht dazu führen kann, dass Teile eines der Sendestrahlungsbündel 12, 12' in das Empfangsfeld 70 zurückgeworfen und damit unter Auslösung eines Störsignals von dem Sensorelementfeld 66 empfangen werden können. Entsprechendes gilt beispielsweise für in dem ausgeblendeten Nahbereich 82 auftretende Regentropfen oder Schneeflocken.

Beim Betrieb werden von den Strahlungsquellen 42 und 42' alternierend mit vorgegebener Frequenz Pulse abgegeben. Zurückgeworfene Strahlung wird von der Empfangseinrichtung 16 bzw. deren Sensorelementfeld 66 empfangen, wobei entsprechende Signale an die Steuer- und Auswerteeinrichtung 24 übermittelt werden. Die Steuer- und Auswerteeinrichtung 24 erfasst die Dauer bzw. Laufzeit zwischen Aussendung eines Pulses und Empfang eines entsprechenden von einem Gegenstand 18 zurückgeworfenen Pulses sowie die Winkelstellung des jeweiligen Sendestrahlungsbündels bzw. des Spiegels 52. Nach Umrechnung der Dauer in einen Abstand unter Verwendung der Lichtgeschwindigkeit werden entsprechende Werte als Polarkoordinaten abgespeichert. Nach Abtastung des Erfassungsbereichs 14, der im Beispiel einen Winkel von etwa 120° umfasst, werden die Daten als Entfernungsbild an die Datenverarbeitungsvorrichtung 30 ausgegeben.

Der Laserscanner zeichnet sich durch eine besonders kompakte und insbesondere in Richtung orthogonal zu der Schwenkebene 60 flache Bauform aus, da die Laserdioden 44 und 44' neben dem Sensorelementfeld 66 mit seiner Längsachse parallel zu dessen Längsachse angeordnet ist, wobei gleichzeitig eine Ausblendung des Nahfeldes und damit ein störungsarmer Betrieb erreicht wird.

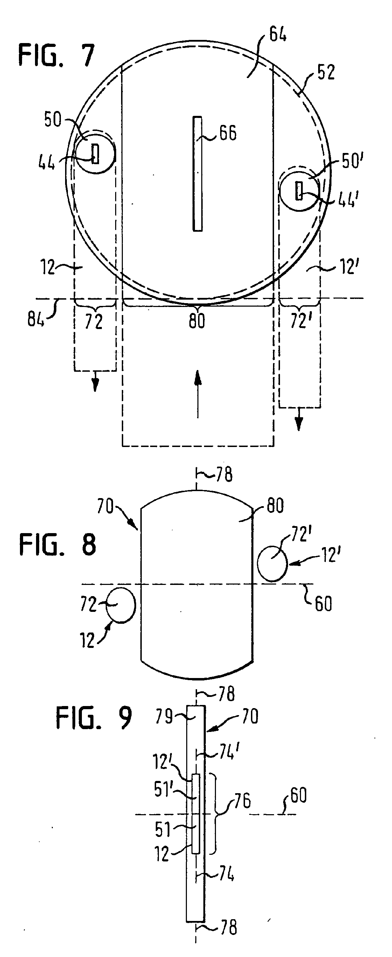

Bei einem zweiten Ausführungsbeispiel sind gegenüber dem ersten Ausführungsbeispiel nur die Strahlungsquellen 42, 42' gegenüber dem ersten Ausführungsbeispiel parallel zu der Längsachse der Laserdioden 44, 44' und entsprechend die Linsen 50 und 50' verschoben (vgl. Fig. 7 bis 9).

Wie in Fig. 8 schematisch gezeigt, sind auch bei diesem Ausführungsbeispiel die Sendestrahlungsbündel 12, 12' in einer Richtung orthogonal zu der Längsrichtung des gegenüber dem ersten Ausführungsbeispiel unveränderten Eingangsquerschnitts von diesem beabstandet angeordnet. Auch hier entsteht eine entsprechende Ausblendung eines Nahbereichs 82.

Die Querschnitte 72 und 72' der Sendestrahlungsbündel 12, 12' entlang der Eingangsebene 84 sind jedoch in einer Richtung parallel zu ihren Längsachsen 74, 74' versetzt angeordnet, so dass im Fernfeld ein längerer Beleuchtungsstrich entsteht (vgl. Fig. 9).

### Bezugszeichenliste

- 10: Sendeeinrichtung
- 12, 12': Sendestrahlungsbündel
- 14: Erfassungsbereich
- 16: Empfangseinrichtung
- 18: Gegenstand
- 20: zurückgeworfene Strahlung
- 22: Ablenkeinrichtung
- 24: Steuer- und Auswerteeinrichtung
- 26: Winkelermittlungseinrichtung
- 28: Datenverbindung
- 30: Datenverarbeitungsvorrichtung
- 32: Gehäuse
- 34: Deckelabschnitt
- 36: Basisabschnitt
- 38: Trägerplatte
- 40: Dom
- 42, 42': Strahlungsquellen
- 44, 44': Laserdioden
- 46, 46': Längsachsen
- 48, 48': Emissionsflächen
- 50, 50': Linsen
- 51, 51': Querschnitte
- 52: Spiegel
- 54: spiegelnde Fläche
- 56: Welle
- 58: Antriebseinheit
- 60: Schwenkebene
- 62: Encoderscheibe
- 64: abbildende Einrichtung
- 66: Sensorelementfeld
- 68: Längsachse des Sensorelementfeldes
- 70: Empfangsfeld
- 72, 72': Querschnitte
- 74, 74': Längsachsen
- 75, 75': Mittelstrahlen
- 76: Fleck
- 78: Längsachse des Empfangsfeldes
- 79: Querschnitt
- 80: Eingangsquerschnitt
- 82: ausgeblendeter Nahbereich
- 84: Eingangsebene

## Patentansprüche

1. Optoelektronische Erfassungsvorrichtung, insbesondere Laserscanner, mit
einer Sendeeinrichtung (10) zur Aussendung von wenigstens einem Sendestrahlungsbündel (12, 12') mit elektromagnetischer Strahlung in einen Erfassungsbereich (14) der Erfassungsvorrichtung,
einer Empfangseinrichtung (16) zum Empfang von aus dem Erfassungsbereich (14) zurückgeworfener Strahlung (20) des Sendestrahlungsbündels (12, 12'), und
einer Ablenkeinrichtung (22), mit der das Sendestrahlungsbündel (12, 12') von der Sendeeinrichtung (10) in den Erfassungsbereich (14) und aus dem Erfassungsbereich (14) zurückgeworfene Strahlung des Sendestrahlungsbündels (12, 12') auf die Empfangseinrichtung (16) lenkbar ist,
wobei die Sendeeinrichtung (10) so ausgebildet ist, dass der Querschnitt des Sendestrahlungsbündels (12, 12') im Fernfeld vor der Erfassungseinrichtung länglich in Richtung einer Längsachse (74, 74') des Querschnitts (51, 51') geformt ist,
wobei die Empfangseinrichtung (16) ein Empfangsfeld (70) aufweist, aus dem Strahlung empfangbar ist und dessen Querschnitt (79) im Fernfeld entlang einer Längsachse (78) des Querschnitts (79) länglich geformt ist, und
wobei die Sende- und die Empfangseinrichtung (16) so ausgebildet und relativ zueinander angeordnet sind, dass im Fernfeld die Längsachsen (74, 74', 78) der Querschnitte (51, 51', 79) des Sendestrahlungsbündels und des Empfangsfeldes im Wesentlichen parallel zueinander ausgerichtet sind,
**dadurch gekennzeichnet,**
**dass** in einer durch einen in Empfangsrichtung unmittelbar vor der Ablenkeinrichtung liegenden Eingangsquerschnitt (80) definierten Eingangsebene (84) das Sendestrahlungsbündel (12, 12') von dem Empfangsfeld (70) in einer Richtung quer zur Längsachse (78) des Empfangsfeldquerschnitts (79) im Fernfeld beabstandet ist.

2. Optoelektronische Erfassungsvorrichtung nach Anspruch 1,
**dadurch gekennzeichnet,**
**dass** das Sendestrahlungsbündel (12, 12') das Empfangsfeld (70) in einem vorgegebenen Abstand von vorzugsweise weniger als 0,5 m von der Ablenkeinrichtung (22) nicht überschneidet.

3. Optoelektronische Erfassungsvorrichtung nach Anspruch 1 oder 2,
**dadurch gekennzeichnet,**
**dass** eine Abdeckung (40) vorgesehen ist, durch die das von der Ablenkeinrichtung (22) abgelenkte Sendestrahlungsbündel (12, 12') abgestrahlt wird und von der Empfangseinrichtung (16) nach Ablenkung durch die Ablenkeinrichtung (22) zu empfangende Strahlung (20) hindurchtritt, und dass sich das Sendestrahlungsbündel (12, 12') und das Empfangsfeld (70) innerhalb der Abdeckung (40) nicht überschneiden.

4. Optoelektronische Erfassungsvorrichtung nach einem der vorhergehenden Ansprüche,
**dadurch gekennzeichnet,**
**dass** die Empfangseinrichtung (16) mehrere entlang einer Längsachse (68) angeordnete Sensorelemente (66) aufweist.

5. Optoelektronische Erfassungsvorrichtung nach einem der vorhergehenden Ansprüche,
**dadurch gekennzeichnet,**
**dass** die Sendeeinrichtung (10) wenigstens eine Strahlungsquelle (42, 42') zur Abgabe eines Sendestrahlungsbündels (12, 12') mit einem länglichen Querschnitt umfasst.

6. Optoelektronische Erfassungsvorrichtung nach einem der vorhergehenden Ansprüche,
**dadurch gekennzeichnet,**
**dass** die Sendeeinrichtung (10) zur Aussendung von wenigstens zwei Sendestrahlungsbündeln (12, 12') mit elektromagnetischer Strahlung in den Erfassungsbereich (14), und die Empfangseinrichtung (16) zum Empfang von aus dem Erfassungsbereich (14) zurückgeworfener Strahlung der Sendestrahlungsbündel (12, 12') ausgebildet sind,
**dass** mittels der Ablenkeinrichtung (22) die Sendestrahlungsbündel (12, 12') von der Sendeeinrichtung (10) in den Erfassungsbereich (14) und aus dem Erfassungsbereich (14) zurückgeworfene Strahlung (20) der Sendestrahlungsbündel (12, 12') auf die Empfangseinrichtung (16) lenkbar sind,
**dass** die Querschnitte (51, 51') der Sendestrahlungsbündel (12, 12') im Fernfeld vor der Erfassungsvorrichtung länglich in Richtungen jeweiliger Längsachsen (74, 74') der Querschnitte (51, 51') geformt sind, und
**dass** die Sende- und die Empfangseinrichtung (16) so ausgebildet und relativ zueinander angeordnet sind, dass im Fernfeld die Längsachsen (74, 74') der Querschnitte (51, 51') der Sendestrahlungsbündel zueinander und zu der Längsachse (78) des Querschnitts (79) des Empfangsfeldes im Wesentlichen parallel ausgerichtet sind, und
**dass** in einer durch einen in Empfangsrichtung unmittelbar vor der Ablenkeinrichtung liegenden Eingangsquerschnitt (80) definierten Ebene die Sendestrahlungsbündel (12, 12') von dem Empfangsfeld (70) in einer Richtung quer zur Längsachse (78) des Empfangsfeldquerschnitts (79) im Fernfeld beabstandet sind.

7. Optoelektronische Erfassungsvorrichtung nach Anspruch 6,
**dadurch gekennzeichnet,**
**dass** die Querschnitte (72, 72') der Sendestrahlungsbündel (12, 12') in der Eingangsebene (84) an gegenüberliegenden Seiten des Eingangsquerschnitts (80) des Empfangsfeldes (70) und vorzugsweise symmetrisch zu dem Eingangsquerschnitt (80) des Empfangsfeldes (70) angeordnet sind.

8. Optoelektronische Erfassungsvorrichtung nach Anspruch 6 oder 7,
**dadurch gekennzeichnet,**
**dass** die Sendeeinrichtung (10) so eingerichtet ist, dass Mittelstrahlen (75, 75') der Sendestrahlungsbündel (12, 12') windschief zueinander sind.

9. Optoelektronische Erfassungsvorrichtung nach einem der Ansprüche 6 bis 8,
**dadurch gekennzeichnet,**
**dass** im Abstand der Reichweite der Erfassungsvorrichtung die Sendestrahlungsbündel (12, 12') in einer Richtung quer zu den Längsachsen (74, 74') ihrer Querschnitte (51, 51') im Fernfeld punktjustiert sind und sich in einer Richtung parallel zu den Längsachsen (74, 74') zu einer Linie (76) ergänzen.

10. Optoelektronische Erfassungsvorrichtung nach einem der Ansprüche 6 bis 9,
**dadurch gekennzeichnet,**
**dass** die Sendeeinrichtung (10) so eingerichtet ist, dass sich die Querschnitte (51, 51') der Sendestrahlungsbündel (12, 12') in einem vorgegebenen Entfernungsbereich von der Erfassungsvorrichtung zum einen in einer Richtung parallel zu den Längsachsen (74, 74') der Sendestrahlungsbündelquerschnitte (51, 51') nur teilweise oder nicht und zum anderen in einer Richtung quer zu den Längsachsen (74, 74') der Sendestrahlungsbündelquerschnitte (51, 51') teilweise oder vollständig überlappen.

11. Optoelektronische Erfassungsvorrichtung nach einem der Ansprüche 6 bis 10,
**dadurch gekennzeichnet,**
**dass** die Sendeeinrichtung (10) wenigstens zwei getrennte Strahlungsquellen (42, 42') zur Abgabe der Sendestrahlungsbündel (12, 12') umfasst.

12. Optoelektronische Erfassungsvorrichtung nach Anspruch 4 und Anspruch 11,
**dadurch gekennzeichnet,**
**dass** die entlang der Längsachse (68) angeordneten Sensorelemente (66) in einer Richtung quer zu der Längsachse (68) zwischen zwei Strahlungsquellen (42, 42') der Sendeeinrichtung (10) angeordnet sind.

13. Optoelektronische Erfassungsvorrichtung nach einem der vorhergehenden Ansprüche,
**dadurch gekennzeichnet,**
**dass** die Sendeeinrichtung (10) wenigstens eine Strahlungsquelle (42, 42') und für jede Strahlungsquelle (42, 42') eine strahlformende Einrichtung (50, 50') sowie die Empfangseinrichtung (16) eine abbildende Einrichtung (64) zur Fokussierung von empfangener Strahlung auf Sensorelemente (66) der Empfangseinrichtung (16) aufweisen, und
**dass** die strahlformenden und die abbildenden Einrichtungen (50, 50', 64) in einer Ebene angeordnet und vorzugsweise als einstückige Platte (38) mit entsprechenden Linsen ausgebildet sind.

14. Optoelektronische Erfassungsvorrichtung nach einem der vorhergehenden Ansprüche,
**dadurch gekennzeichnet,**
**dass** die Ablenkeinrichtung (22) durch eine um eine vorgegebene Achse drehbare, spiegelnde Fläche (54) und einen Drehantrieb (56, 58) zum Drehen der spiegelnden Fläche (54) aufweist.
